# FASCICULE DE BREVET EUROPEEN

(11) **EP 0 868 248 B1**
(45) Date de publication et mention de la délivrance du brevet: **30.06.1999**
(21) Numéro de dépôt: 96939159.8
(22) Date de dépôt: 20.11.1996
(51) Int. Cl.: B23K 9/23

(54) **PROCEDE DE RACCORDEMENT PAR SOUDAGE HETEROGENE BOUT A BOUT DE DEUX PIECES DE NATURES DIFFERENTES ET UTILISATIONS**
VERFAHREN ZUM VERBINDEN DURCH HETEROGENES STUMPFSCHWEISSEN VON ZWEI VERSCHIEDENARTIGEN WERKSTÜCKEN UND ANWENDUNGEN
METHOD FOR JOINING TWO PARTS OF DIFFERENT KINDS BY HETEROGENEOUS BUTT WELDING, AND USES THEREOF

(30) Priorité: 18.12.1995 FR 9514990
(43) Date de publication de la demande: 07.10.1998
(73) Titulaire: FRAMATOME, 92400 Courbevoie (FR)
(72) Inventeur: FOURNIER, Yves, F-71880 Chantenoy-le-Royal (FR); PEIGNEY, Alain, F-71240 Saint-Loup-de-Varennes (FR); DUNAND-ROUX, Léon, F-71880 Chantenoy-le-Royal (FR)
(74) Mandataire: Bouget, Lucien
(86) Numéro de dépôt international: FR9601839
(87) Numéro de publication internationale: WO9722433

(56) Documents cités:
- EP-A- 0 668 120
- DE-C- 3 314 389
- US-A- 4 962 586
- PATENT ABSTRACTS OF JAPAN vol. 14, no. 491 (M-1040), 25 Octobre 1990 & JP 02 200394 A (NIPPON STEEL CORP), 8 Août 1990,
- WELDING IN THE WORLD, vol. 36, Juin 1995, OXFORD GB, pages 193-200, XP000506612 GENTA TAKANO ET AL.: "WELDING OF STAINLESS STEEL IN NUCLEAR ENERGY INDUSTRY"

## Description

L'invention concerne un procédé de raccordement par soudage hétérogène bout à bout d'une première pièce en acier de construction faiblement allié et d'une seconde pièce en acier inoxydable austénitique.

Les réacteurs nucléaires et en particulier les réacteurs nucléaires à eau sous pression comportent des composants tels que la cuve du réacteur, les générateurs de vapeur et le pressuriseur qui sont réalisés en acier de construction à haute résistance faiblement allié, revêtu intérieurement d'une couche d'acier inoxydable et reliés par l'intermédiaire d'une ou plusieurs tubulures à une ou plusieurs tuyauteries en acier inoxydable austénitique constituant par exemple des canalisations du circuit primaire du réacteur.

La cuve d'un réacteur nucléaire présente une forme générale cylindrique et comporte une virole porte-tubulures dans laquelle sont formées un ensemble de tubulures permettant le raccordement de la cuve aux tuyauteries des différentes boucles du circuit primaire.

Les générateurs de vapeur des réacteurs nucléaires à eau sous pression comportent une boîte à eau ayant une paroi de forme hémisphérique constituant la partie inférieure du générateur de vapeur, dans laquelle sont formées deux tubulures qui sont reliées par soudage à deux canalisations du circuit primaire du réacteur.

Le pressuriseur d'un réacteur nucléaire à eau sous pression comporte une enveloppe de forme générale cylindrique ayant deux fonds bombés, le fond inférieur présentant une tubulure de raccordement au circuit primaire du réacteur nucléaire par l'intermédiaire d'une tuyauterie d'expansion en acier inoxydable austénitique, le fond supérieur étant raccordé de la même manière à d'autres tuyauteries en acier inoxydable austénitique.

Dans tous les cas, les tubulures de raccordement du composant qui sont en acier de construction et revêtues intérieurement d'acier inoxydable doivent être fixées par soudage bout à bout sur une tuyauterie en acier inoxydable austénitique.

Il est donc nécessaire de réaliser une soudure de jonction hétérogène entre la tubulure et la tuyauterie, cette soudure hétérogène étant réalisée en déposant un métal d'apport à l'intérieur d'un chanfrein ménagé entre la tubulure et la tuyauterie ou entre la tubulure et un tronçon intermédiaire de raccordement en acier inoxydable austénitique.

Préalablement à la réalisation de la soudure hétérogène entre la tubulure et la tuyauterie ou le tronçon intermédiaire, il est nécessaire de déposer une couche épaisse d'acier inoxydable ou d'alliage de nickel, souvent appelée "beurrage", sur la partie d'extrémité de la tubulure constituant une surface de délimitation du chanfrein dans lequel on dépose le métal d'apport, lors du soudage.

Dans le cas où l'on réalise le soudage par dépôt d'alliage de nickel dans le chanfrein, on réalise un beurrage des deux surfaces latérales limitant le chanfrein, c'est-à-dire de la surface usinée sur la tubulure et de la surface usinée sur la canalisation en acier inoxydable, en utilisant un alliage de nickel.

L'utilisation d'alliage de nickel comme métal d'apport permet d'obtenir de meilleures caractéristiques mécaniques du joint soudé.

Cependant, lorsque le métal d'apport est constitué par un alliage de nickel, sa mise en oeuvre lors du soudage et son contrôle après soudage sont plus difficiles à réaliser que dans le cas où le métal d'apport est constitué par un acier inoxydable par exemple du type 316 L. En effet, les alliages de nickel présentent une plus forte oxydabilité et une plus forte sensibilité à la fissuration à chaud que l'acier inoxydable 316 L. En outre, du fait d'une grande différence d'absorption des rayons γ par l'acier ferritique de la tubulure et par le métal d'apport, le contrôle radiographique de la soudure est d'une mise en oeuvre délicate.

Les opérations préalables au soudage, c'est-à-dire l'usinage du chanfrein et les opérations de beurrage allongent la durée d'intervention pour effectuer le raccordement et entraînent des coûts importants.

Enfin, certains défauts ont été détectés dans les zones soudées hétérogènes, ces défauts ne portant cependant pas atteinte à la sûreté des liaisons soudées.

Dans le EP-0.668.120, on a décrit un procédé de soudage hétérogène d'un acier ferritique contenant en particulier de 1,50 à 3,50 % de Cr et de 1 à 3 % de tungstène et d'un acier austénitique, utilisant un alliage de nickel comme métal d'apport. Un tel procédé nécessite de substituer un acier ferritique de composition particulière à l'acier ferritique habituel à 2 ¼ de chrome.

Dans un article de la revue Welding in the World, vol. 36 de juin 1995, pages 193-200, on décrit des techniques de soudage utilisées dans le cas de réacteurs nucléaires. On utilise en particulier une technique de soudage à l'arc avec métal d'apport en joint étroit qui est appliquée dans le cas du soudage d'éléments en acier inoxydable du réacteur FBR "MONJU".

Le but de l'invention est donc de proposer un procédé de raccordement par soudage hétérogène bout à bout d'une première pièce en acier de construction faiblement allié et d'une seconde pièce en acier inoxydable austénitique, consistant à usiner une partie d'extrémité de chacune des pièces, à placer les parties d'extrémité usinées des pièces en vis-à-vis, de manière à constituer un chanfrein de soudage s'étendant dans une direction longitudinale entre les pièces et à déposer un métal d'apport dans le chanfrein de soudage, ce procédé permettant de limiter la durée et le coût des opérations nécessaires pour effectuer le raccordement, en particulier par la suppression des opérations préalables de beurrage des surfaces du chanfrein de soudage.

Dans ce but, le chanfrein de soudage est un chanfrein étroit dont la largeur maximale dans une direction perpendiculaire à la direction longitudinale du chanfrein et aux parois latérales est inférieure ou égale à 15 mm et dont les parois latérales parallèles à la direction longitudinale et constituées par des parties usinées des deux pièces sont pratiquement parallèles entre elles, ces parois faisant, avec un plan médian du chanfrein de direction longitudinale, un angle voisin de 1° et qu'on dépose dans le chanfrein de soudage un alliage d'apport contenant en masse de 18 à 32 % de chrome ainsi qu'éventuellement du fer, du manganèse, du silicium, du molybdène, de l'aluminium, du cuivre, du niobium et du titane, le reste de l'alliage, à l'exception des impuretés provenant de l'élaboration, étant constitué par du nickel dont la teneur est au moins égale à 53 % en masse.

Afin de bien faire comprendre l'invention, on va maintenant décrire, à titre d'exemple non limitatif, en se référant aux figures jointes en annexe, un mode de réalisation du procédé suivant l'invention, et ses applications dans le cadre de la construction et de la réparation des réacteurs nucléaires.
La figure 1 est une demi-vue en coupe d'une partie de la cuve d'un réacteur nucléaire montrant une tubulure de jonction de la cuve au circuit primaire et une partie d'une canalisation du circuit primaire.
La figure 2 est une vue en élévation et en coupe partielle de la partie inférieure d'un générateur de vapeur d'un réacteur nucléaire à eau sous pression.
La figure 3 est une vue en coupe par un plan vertical d'un pressuriseur d'un réacteur nucléaire à eau sous pression.
La figure 4 est une demi-vue en coupe à grande échelle des parties de jonction d'une tubulure en acier ferritique et d'une canalisation en acier austénitique, délimitant entre elles un chanfrein de soudage étroit pour la mise en oeuvre du procédé de raccordement suivant l'invention:
La figure 5 est une vue en coupe analogue à la vue de la figure 4 montrant le chanfrein de soudage pendant son remplissage par du métal d'apport, dans le cadre de la mise en oeuvre du procédé de raccordement suivant l'invention.
La figure 6 est une demi-vue en coupe des parties de raccordement d'une canalisation et d'une tubulure analogue aux vues des figures 4 et 5, montrant le chanfrein de soudage rempli par du métal d'apport à l'issue de l'opération de soudage.

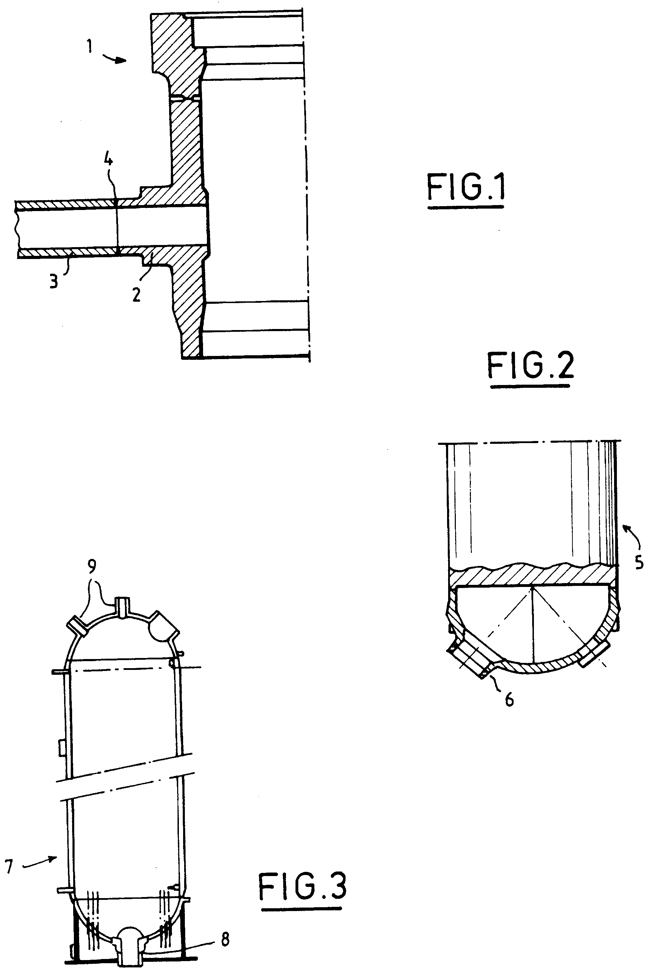

Sur la figure 1, on voit une partie supérieure de la cuve 1 d'un réacteur nucléaire à eau sous pression comportant une tubulure 2 de raccordement de la cuve à une canalisation 3 du circuit primaire en acier inoxydable austénitique. La cuve 1 du réacteur nucléaire est en un acier de construction faiblement allié qui sera désigné par la suite comme acier "ferritique". La tubulure 2 en acier ferritique est raccordée bout à bout par une soudure 4 à la canalisation 3 du circuit primaire en acier inoxydable austénitique. La soudure 4 est donc une soudure hétérogène. La jonction de la canalisation 3 à la tubulure 2 par réalisation d'une soudure hétérogène 4 peut être effectuée par le procédé de l'invention.

Sur la figure 2, on voit la partie inférieure d'un générateur de vapeur 5 d'un réacteur nucléaire à eau sous pression qui comporte une boîte à eau délimitée par une paroi sphérique comportant des tubulures de raccordement telles que la tubulure 6 permettant de relier une canalisation du circuit primaire du réacteur à la boîte à eau du générateur de vapeur. La boîte à eau du générateur de vapeur comporte deux compartiments dans chacun desquels est prévue une tubulure de raccordement d'une canalisation du circuit primaire. Le générateur de vapeur 5 est réalisé en un acier de construction faiblement allié, de sorte que le raccordement des canalisations du circuit primaire en acier inoxydable austénitique aux tubulures du générateur de vapeur telles que la tubulure 6 doit être effectué en réalisant une soudure hétérogène. Ce raccordement peut être réalisé par le procédé de l'invention.

Sur la figure 3, on voit un pressuriseur 7 d'un réacteur nucléaire à eau sous pression comportant dans sa partie inférieure une tubulure 8 de raccordement à une ligne d'expansion par l'intermédiaire de laquelle est réalisé le réglage de la pression dans le circuit primaire du réacteur nucléaire.

L'enveloppe du pressuriseur 7 et la tubulure 8 sont en un acier de construction faiblement allié, appelé acier ferritique, et la ligne d'expansion est en un acier inoxydable austénitique. Le raccordement est donc effectué par l'intermédiaire d'une soudure hétérogène et peut être réalisé par le procédé de l'invention. Le pressuriseur 7 comporte de plus dans son fond supérieur des tubulures 9 de raccordement à une ligne de décharge et à une ligne d'aspersion en acier inoxydable austénitique. Les liaisons des tubulures 9 du pressuriseur aux lignes correspondantes peuvent être effectuées également par le procédé de l'invention.

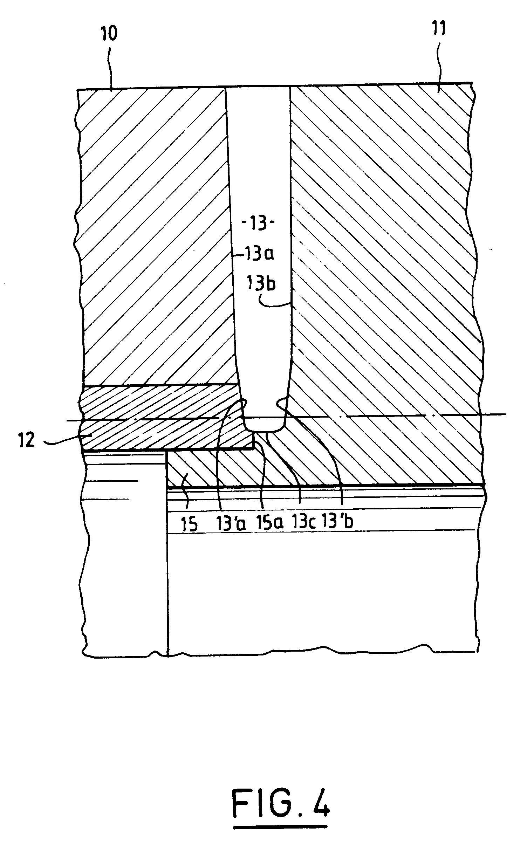

Sur la figure 4, on voit une partie d'extrémité d'une tubulure 10 en acier ferritique d'une cuve d'un réacteur nucléaire à eau sous pression et une partie d'extrémité d'une canalisation 11 en acier inoxydable austénitique du circuit primaire du réacteur nucléaire qui est destinée à être raccordée à la tubulure 10, dans une disposition relative identique à celle de la tubulure 2 et de la canalisation primaire 3 de la cuve 1 représentée sur la figure 1. Dans cette disposition relative, la tubulure 10 en acier ferritique et la canalisation 11 en acier inoxydable austénitique sont placées de manière coaxiale et bout à bout.

La tubulure 10 comporte sur sa surface interne une couche de revêtement 12 en acier inoxydable venant en contact avec le fluide primaire, lorsque le réacteur nucléaire est en service.

Les parties d'extrémité de la tubulure 10 et de la canalisation 11 sont usinées puis rapportées l'une contre l'autre, de manière à délimiter un chanfrein étroit 13. L'usinage des parties d'extrémité de la tubulure 10 et de la canalisation 11 est réalisé de manière que le chanfrein 13 présente deux parois latérales opposées 13a, 13b pratiquement parallèles entre elles et perpendiculaires à l'axe commun à la tubulure 10 et à la canalisation 11. En réalité, les parois planes 13a et 13b font un angle voisin de 1° avec un plan perpendiculaire à l'axe commun à la tubulure 10 et à la canalisation 11 dans des positions alignées.

Le fond du chanfrein 13 vers l'intérieur de la tubulure et de la canalisation venant en contact avec le fluide primaire qui est délimité par des surfaces inclinées usinées dans la tubulure 10 et dans son revêtement inoxydable 12 et dans la canalisation en acier inoxydable 11 comporte des parois 13'a et 13'b faisant un angle faible, de l'ordre de 4° avec un plan perpendiculaire à l'axe commun à la tubulure 10 et à la canalisation 11. Le chanfrein 13 comporte un fond de forme cylindrique 13c ayant pour axe l'axe commun à la tubulure 10 et à la canalisation 11. L'ouverture du chanfrein 13 dans la direction de l'axe de la tubulure 10 et de la canalisation 11 varie entre une valeur voisine de 11 mm dans la partie basse et une valeur voisine de 14 mm dans la partie haute.

De manière plus générale, on prendra en compte, comme paramètre définissant la géométrie du chanfrein l'angle d'ouverture des parois latérales du chanfrein, c'est-à-dire l'angle des parois latérales usinées dans les pièces à joindre avec un plan médian du chanfrein de direction longitudinale, par rapport auquel le chanfrein est sensiblement symétrique.

Pour la mise en oeuvre de l'invention, il est préférable que le chanfrein étroit présente une ouverture maximale dans la direction axiale, ou plus généralement une largeur maximale dans une direction perpendiculaire à la direction longitudinale et aux faces latérales du chanfrein, de l'ordre de 15 mm.

Cependant, la largeur maximale d'ouverture du chanfrein peut être variable avec l'épaisseur des pièces à souder.

La partie d'extrémité interne de la canalisation 11 en acier inoxydable austénitique est usinée pour réaliser un talon d'appui annulaire 15 qui permet d'engager la canalisation 11 sur la partie d'extrémité de la tubulure, de manière que la couche de revêtement inoxydable 12 vienne en butée contre un épaulement 15a usiné sur la partie d'extrémité de la canalisation 11 pour fermer le fond du chanfrein 13.

De manière générale, les parois du chanfrein étroit utilisé dans le cadre de l'invention sont pratiquement parallèles sur la plus grande partie de leur longueur dans la direction radiale.

L'ouverture maximale du chanfrein étroit dans la direction axiale est de l'ordre de 15 mm.

Dans tous les cas, la jonction entre la pièce tubulaire en acier ferritique et la pièce tubulaire en acier austénitique est effectuée par soudage sans beurrage préalable des parois d'extrémité délimitant le chanfrein.

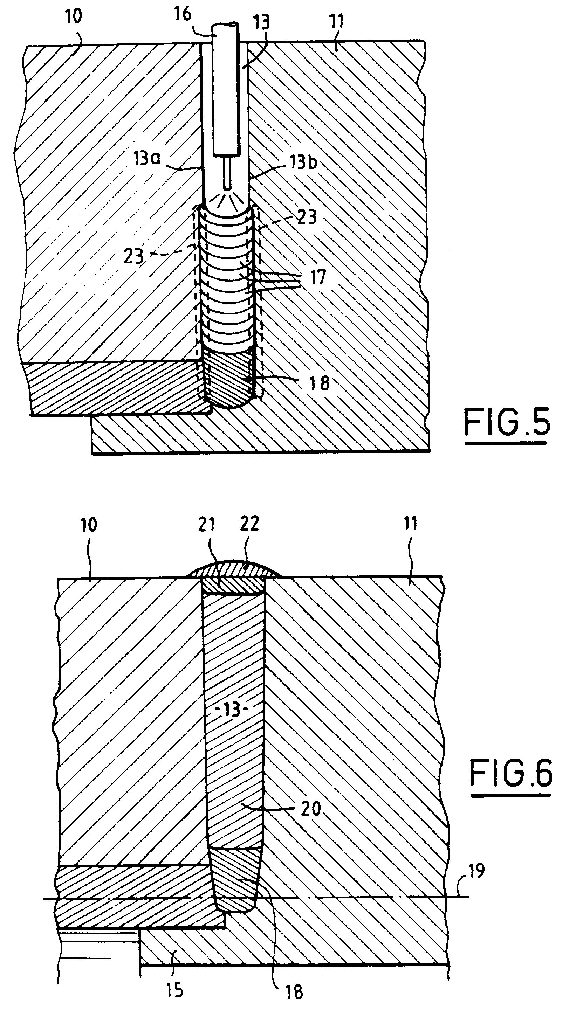

Sur la figure 5, on a représenté la tubulure 10 et la canalisation en acier inoxydable 11 délimitant entre elles le chanfrein 13 dans lequel on dépose un métal d'apport à l'aide d'une torche de soudage 16.

On utilise généralement une torche de soudage TIG (Tungsten Inert Gas) dans le cadre d'un procédé de soudage où les pièces à souder tournent en vis-à-vis de la torche de soudage fixe.

L'électrode de la torche de soudage 16 permet de fondre un fil en métal d'apport de manière à déposer des couches successives 17 à l'intérieur du chanfrein 13, chaque couche successive 17 étant réalisée au cours d'une passe de soudage pendant laquelle les pièces effectuent un tour complet autour de l'axe commun à la tubulure 10 et à la canalisation 11.

Il n'est pas nécessaire de déposer des cordons de soudure juxtaposés en plusieurs passes successives pour réaliser les couches 17. En effet, la largeur limitée du chanfrein permet le dépôt d'une couche continue 17 assurant la liaison entre les deux faces 13a et 13b du chanfrein. Les zones de jonction des pièces 10 et 11 au voisinage des faces latérales du chanfrein ne sont pas refondues directement par la torche de soudage mais uniquement par conduction thermique entre le métal d'apport déposé sous forme de métal liquide et le métal des pièces, ce qui assure la liaison entre les zones de jonction des pièces et le métal d'apport avec une dilution faible dans les zones de jonction des pièces.

Les premières passes de soudage dans le fond du chanfrein 13, c'est-à-dire du côté interne de la tubulure et de la canalisation sont effectuées par dépôt d'un métal d'apport 18 constitué par un premier alliage de nickel renfermant (en poids) moins de 0,04 % de carbone, moins de 0,015 % de soufre et moins de 0,015 % de phosphore, de 28 à 31,5 % de chrome, moins de 0,50 % de molybdène, moins de 1,10 % d'aluminium, moins de 0,30 % de cuivre, moins de 1 % de titane, éventuellement de 7 à 12 % de fer, le solde de l'alliage étant constitué essentiellement par du nickel.

Au lieu d'alliage de nickel, on peut déposer dans le fond du chanfrein 13, pour constituer la racine 18 en métal d'apport, un acier inoxydable 316 L à faible carbone, renfermant 17 % de chrome et 12 % de nickel.

On complète le remplissage du chanfrein étroit 13 par dépôt d'un second alliage de nickel renfermant moins de 0,10 % de carbone, de 18 à 22 % de chrome, moins de 0,50% de cuivre, éventuellement 2 à 3 % de niobium, moins de 0,75 % de titane et moins de 3 % de fer ainsi que de 2,50 à 3,50 % de manganèse, moins de 0,030 % de phosphore, moins de 0,015% de soufre et moins de 0,50 % de silicium, le reste étant constitué essentiellement par du nickel dont la proportion pondérale est supérieure à 67%.

Le métal de remplissage est déposé par couches successives 17 jusqu'au remplissage complet du chanfrein.

Chacune des couches de métal d'apport telles que les couches 17 représentées sur la figure 5 est constituée d'un seul cordon de soudure déposé sous forme liquide dans le chanfrein. Les bords des pièces 10 et 11 qui ne sont pas refondus par l'arc électrique produit par l'électrode de soudage 16 subissent une fusion dans une zone d'épaisseur limitée du fait du contact avec le métal liquide déposé. Les zones 23 (représentées en pointillés sur la figure 5) dans lesquelles se produit un effet de dilution des compositions de base sont de faible épaisseur. Le joint soudé présente des caractéristiques mécaniques homogènes et le risque de fissuration dans la zone de soudage est très limité.

Comme représenté sur les figures 5 et 6, le joint soudé comporte une partie de racine remplie par le métal d'apport 18 constitué par le premier alliage de nickel ou par de l'acier inoxydable.

Après qu'on ait réalisé le raccordement de la tubulure 10 et de la canalisation 11 par l'intermédiaire du joint soudé remplissant le chanfrein étroit 13, on effectue un usinage par arasage de la surface intérieure des pièces tubulaires, jusqu'à la surface cylindrique interne 19, de manière à éliminer le talon d'appui 15 de la canalisation 11 et à obtenir une surface interne lisse dans la zone de raccordement des pièces tubulaires 10 et 11. Après usinage, le métal 18 de la racine du joint soudé constitué par le premier alliage de nickel ou de l'acier inoxydable 316 L se trouve apparent sur la surface interne des pièces tubulaires destinée à venir en contact avec le fluide primaire du réacteur nucléaire.

Le premier alliage de nickel et l'acier inoxydable 316 L sont connus pour résister à la corrosion et en particulier à la corrosion sous tension au contact d'eau primaire du réacteur à haute température et à haute pression.

Le second alliage de nickel qui constitue la zone de remplissage principale 20 du chanfrein obtenu par soudage automatique et les zones de fin de remplissage 21 et de finition 22 légèrement en saillie par rapport à la surface externe des pièces tubulaires, n'est pas en contact avec le fluide primaire et n'est donc pas soumis à la corrosion sous tension dans le réacteur en service.

Il est également possible de réaliser un joint soudé entièrement avec le premier alliage de nickel résistant à la corrosion sous tension par dépôt de cet alliage aussi bien dans la partie de racine du chanfrein étroit que dans la partie de remplissage principale située vers l'extérieur du chanfrein.

Il est également possible d'utiliser un ou plusieurs alliages de nickel différents du premier alliage et du second alliage ; ces alliages de nickel ont de manière générale une teneur en chrome de 18 à 32 % et une teneur en nickel au moins égale à 53 % en poids. Ces alliages peuvent renfermer éventuellement, en plus du chrome et du nickel, du fer, du molybdène, de l'aluminium, du cuivre, du niobium et du titane.

Une teneur en chrome d'au moins 18 % est nécessaire pour assurer une tenue à la corrosion acceptable de l'alliage, cette teneur en chrome devant être inférieure à 32 % pour obtenir une structure purement austénitique du métal déposé et pour éviter l'apparition de précipités intermétalliques.

Dans le cas où l'alliage de nickel est utilisé également pour le remplissage de la racine du chanfrein, du côté primaire, il est nécessaire que la teneur en chrome se situe dans la partie haute de l'intervalle, entre 25 et 32 % en poids de chrome.

La teneur en carbone de l'alliage doit être toujours inférieure à 0,10 % et de préférence inférieure à 0,05 % dans le cas où l'alliage de nickel est utilisé pour effectuer le remplissage de la racine du chanfrein du côté primaire.

Le procédé suivant l'invention permet d'obtenir un raccordement de deux pièces dont l'une est en un acier de construction faiblement allié et l'autre en un acier austénitique, sans effectuer de dépôt préalable d'une couche de beurrage sur les parties d'extrémité des pièces tubulaires à joindre.

En outre, le joint soudé obtenu par le procédé de l'invention à l'intérieur d'un chanfrein étroit est exempt de défaut et en utilisant des alliages de nickel appropriés, on peut obtenir un joint ayant de très bonnes propriétés mécaniques et résistant à la corrosion sous tension.

Le procédé suivant l'invention ne se limite pas aux modes de réalisation qui ont été décrits.

Le procédé peut être utilisé pour réaliser le soudage de pièces qui ne sont pas de forme tubulaire, par exemple de pièces plates. Dans le cas de pièces tubulaires dont on effectue le raccordement bout à bout, la direction longitudinale du chanfrein est une direction circonférentielle des pièces ; les parois latérales des pièces font un angle faible avec un plan perpendiculaire à l'axe commun aux deux pièces par rapport auquel les parois latérales du chanfrein sont sensiblement symétriques. Dans le cas de pièces de forme plate, le chanfrein peut être disposé suivant une direction longitudinale des pièces qui est rectiligne ; les parois latérales du chanfrein font un angle faible avec un plan médian du chanfrein de direction longitudinale par rapport auquel les faces latérales sont sensiblement symétriques. On peut bien sûr imaginer d'autres formes de chanfreins disposés suivant une direction longitudinale différente d'une direction circonférentielle de pièces tubulaires ou d'une direction disposée suivant une ligne droite dans le cas de pièces plates.

On peut imaginer d'utiliser, pour le remplissage du chanfrein, un premier et un second alliages de nickel tels que définis de manière générale par les compositions données ci-dessus, un seul alliage de nickel résistant à la corrosion sous tension ou encore un acier inoxydable et un alliage de nickel.

L'invention s'applique au raccordement de pièces tubulaires différentes d'une tubulure de cuve et d'une canalisation du circuit primaire d'un réacteur nucléaire. En particulier, l'invention peut s'appliquer au raccordement des canalisations primaires sur les tubulures de la boîte à eau d'un générateur de vapeur et au raccordement d'un pressuriseur à une ligne d'expansion en acier inoxydable.

## Revendications

1. Procédé de raccordement par soudage hétérogène bout à bout d'une première pièce (10) en acier de construction faiblement allié et d'une seconde pièce (11) en acier inoxydable austénitique, consistant à usiner une partie d'extrémité de chacune des pièces (10, 11), à placer les parties d'extrémité usinées des pièces (10, 11) en vis-à-vis de manière à constituer un chanfrein de soudage (13) s'étendant dans une direction longitudinale entre les pièces (10, 11) et à déposer un métal d'apport dans le chanfrein de soudage (13), caractérisé par le fait que le chanfrein de soudage (13) est un chanfrein étroit dont la largeur maximale dans une direction perpendiculaire à la direction longitudinale du chanfrein et aux parois latérales est inférieure ou égale à 15 mm et dont les parois latérales parallèles à la direction longitudinale et constituées par des parties usinées des deux pièces (10, 11) sont pratiquement parallèles entre elles, ces parois faisant, avec un plan médian du chanfrein de direction longitudinale, un angle voisin de 1°, et qu'on dépose dans le chanfrein de soudage (13) un alliage d'apport contenant en masse de 18 à 32 % de chrome ainsi qu'éventuellement du fer, du manganèse, du silicium, du molybdène, de l'aluminium, du cuivre, du niobium et du titane, le reste de l'alliage, à l'exception des impuretés provenant de l'élaboration, étant constitué par du nickel dont la teneur est au moins égale à 53 % en masse.

2. Procédé de raccordement suivant la revendication 1, dans le cas où la première (10) et la seconde (11) pièces sont de forme tubulaire, la première pièce (10) comporte un revêtement interne (12) en acier inoxydable et le chanfrein de soudage (13) de forme annulaire a pour axe un axe commun à la première (10) et à la seconde (11) pièces qui sont placées bout à bout et dans une disposition coaxiale, caractérisé par le fait qu'on dépose dans une première partie du chanfrein de soudage située vers l'intérieur des pièces tubulaires (10, 11) appelée racine ayant des parois (13'a, 13'b) faisant un angle de l'ordre de 4° avec un plan perpendiculaire à l'axe commun aux deux pièces tubulaires (10, 11), un premier alliage de nickel ou un acier inoxydable et dans une seconde partie du chanfrein de soudage (13) située dans le prolongement de la racine, vers l'extérieur des pièces, un second alliage de nickel.

3. Procédé suivant la revendication 2, caractérisé par le fait que le premier alliage de nickel renferme, en masse, moins de 0,04 % de carbone, moins de 0,015 % de soufre et moins de 0,015 % de phosphore, de 28 à 31,5 % de chrome, éventuellement de 7 à 12 % de fer, moins de 0,50 % de molybdène, moins de 1,10 % d'aluminium, moins de 0,30 % de cuivre, moins de 1 % de titane, le reste de l'alliage, à l'exception des impuretés provenant de l'élaboration, étant constitué par du nickel.

4. Procédé suivant la revendication 2, caractérisé par le fait que l'acier inoxydable déposé dans la première partie du chanfrein (13) est un acier à faible carbone renfermant à peu près 17 % de chrome et 12 % de nickel.

5. Procédé suivant l'une quelconque des revendications 2 à 4, caractérisé par le fait que le second alliage de nickel renferme en masse, moins de 0,10% de carbone, de 18 à 22 % de chrome, moins de 3 % de fer, moins de 0,50 % de cuivre, éventuellement de 2 à 3 % de niobium, moins de 0,75 % de titane ainsi que de 2,50 à 3,50 % de manganèse, moins de 0,030 % de phosphore, moins de 0,015 % de soufre et moins de 0,50 % de silicium, le reste de l'alliage, à l'exception des impuretés provenant de l'élaboration, étant constitué par du nickel dont la proportion pondérale est supérieure à 67 %.

6. Procédé selon la revendication 1, caractérisé par le fait que le métal d'apport est constitué par un seul alliage de nickel renfermant en masse, moins de 0,04 % de carbone, de 28 à 31,5 % de chrome, éventuellement de 7 à 12 % de fer, moins de 0,50 % de molybdène, moins de 1,10 % d'aluminium, moins de 0,30 % de cuivre et moins de 1 % de titane, le reste de l'alliage, à l'exception des impuretés provenant de l'élaboration, étant constitué par du nickel.

7. Utilisation d'un procédé suivant l'une quelconque des revendications 1 à 6, pour le raccordement d'une tubulure (2) d'un réacteur nucléaire à eau sous pression et d'une canalisation (3) du circuit primaire en acier inoxydable.

8. Utilisation d'un procédé suivant l'une quelconque des revendications 1 à 6, pour effectuer le raccordement d'une tubulure (6) de la boîte à eau d'un générateur de vapeur (5) d'un réacteur nucléaire à eau sous pression et d'une canalisation du circuit primaire du réacteur en acier inoxydable austénitique.

9. Utilisation d'un procédé suivant l'une quelconque des revendications 1 à 6 pour effectuer le raccordement d'une tubulure (8) d'un pressuriseur (7) d'un réacteur nucléaire à eau sous pression et d'une ligne d'expansion en acier inoxydable reliée au circuit primaire du réacteur.

## Claims

1. A joining process by heterogeneous butt welding of a first part (10) made of steel of an alloy treated construction and of a second part (11) made of austenitic stainless steel, consisting of machining an end portion of each one of the parts (10,11), placing the machined end portions of the parts (10,11) face to face in order to form a welding chamfer (13) extending in a longitudinal direction between the parts (10,11) and of depositing a filler metal into the welding chamfer (13), characterised in that the welding chamfer (13) is a narrow chamfer whose maximum width in a direction perpendicular to the chamfer longitudinal direction and to the side walls, is less than or equal to 15 mm and whose side walls parallel to the longitudinal direction and made of the machined portions of the two parts (10,11), are practically parallel to each other, these walls forming, with a median plane of the chamfer of longitudinal direction, an angle of about 1°, and in that a filler alloy containing from 18 to 32% by weight of chromium as well as possibly some iron, manganese, silicon, molybdenum, aluminium, copper, niobium and titanium, is deposited into the welding chamfer (13), the rest of the alloy, with the exception of impurities resulting from machining, being made of nickel whose content is at least equal to 53% by weight.

2. A joining process according to claim 1, in the case where the first (10) and the second (11) parts are of tubular shape, the first part (10) includes an inner lining (12) made of stainless steel and the axis of the welding chamfer (13) of annular shape is an axis common to the first (10) and second (11) parts which are placed end to end in a coaxial arrangment, characterised in that a first nickel alloy or a stainless steel is deposited into a first portion of the welding chamfer located towards the inside of the tubular parts (10,11) called the root pass having walls (13'a,13'b) forming an angle of about 4° with a plane perpendicular to the axis common to the two tubular parts (10,11) and a second nickel alloy into a second portion of the welding chamfer (13) located in the prolongation of the root pass, towards the outside of the parts.

3. A process according to claim 2, characterised in that the first nickel alloy contains by weight less than 0.04% of carbon, less than 0.015% of sulfur and less than 0.015% of phosphorus, from 28 to 31.5% of chromium, possibly between 7 and 12% of iron, less than 0.50% of molybdenum, less than 1.10% of aluminium, less than 0.30% of copper, less than 1% of titanium, the rest of the alloy, with the exception of impurities resulting from machining, being made of nickel.

4. A process according to claim 2, characterised in that the stainless steel deposited in the first portion of the chamfer (13) is a light carbon steel containing approximately 17% of chromium and 12% of nickel.

5. A process according to any one of claims 2 to 4, characterised in that the second nickel alloy contains by weight less than 0.10% of carbon, between 18 and 22% of chromium, less than 3% of iron, less than 0.50% of copper, possibly between 2 and 3% of niobium, less than 0.75% of titanium as well as from 2.50 to 3.50% of manganese, less than 0.030% of phosphorus, less than 0.015% of sulfur and less than 0.50% of silicon, the rest of the alloy, with the exception of impurities resulting from machining, being made of nickel whose proportion by weight is greater than 67%.

6. A process according to claim 1, characterized in that the filler metal is composed of a single nickel alloy containing by weight less than 0.04% of carbon, from 28 to 31.5% of chromium, possibly from 7 to 12% of iron, less than 0.50% of molybdenum, less than 1.10% of aluminium, less than 0.30% of copper and less than 1% of titanium, the rest of the alloy, with the exception of impurities resulting from machining, being made of nickel.

7. The use of a process according to any one of claims 1 to 6, for joining the tubing (2) of a pressurised water nuclear reactor and a pipe (3) from the stainless steel primary system.

8. The use of a process according to any one of claims 1 to 6, for joining the tubing (6) of the water tank of a steam generator (5) of a pressurised water nuclear reactor and a pipe from the austenitic stainless steel primary system of the reactor.

9. The use of a process according to any one of claims 1 to 6, for joining the tubing (8) of a pressuriser (7) of a pressurised water nuclear reactor and a stainless steel expansion line connected to the reactor primary system.

## Patentansprüche

1. Verfahren zur Verbindung eines ersten Bauteils (10) aus einem schwach legierten Baustahl mit einem zweiten Bauteil (11) aus oxidationsfreiem Austenitstahl durch heterogenes Stumpfnahtschweißen, das darin besteht, einen Endbereich jedes der Bauteile (10, 11) maschinell zu bearbeiten, die bearbeiteten Endbereiche der Bauteile (10, 11) einander gegenüber so anzuordnen, daß eine Schweißfase (13) gebildet wird, die sich in einer Längsrichtung zwischen den Bauteilen (10, 11) erstreckt, und ein Zusatzmetall in die Schweißfase (13) einzubringen, dadurch gekennzeichnet, daß die Schweißfase (13) eine enge Fase ist, deren maximale Breite in einer Richtung senkrecht zur Längsrichtung der Fase und zu den Seitenwänden höchstens 15 mm beträgt, und deren zur Längsrichtung parallele Seitenwände, die aus bearbeiteten Bereichen dar beiden Bauteile (10, 11) bestehen, praktisch zueinander parallel sind, wobei diese Wände mit einer längsgerichteten Mittelebene der Fase einen Winkel nahe 1° bilden, und daß man in die Schweißfase (13) eine Zusatzlegierung einbringt, die in Masseprozent ausgedrückt 18 bis 32 % Chrom sowie ggf. Eisen, Mangan, Silicium, Molybdän, Aluminium, Kupfer, Niobium und Titan enthält, wobei der Rest der Legierung, mit Ausnahme der von der Verhüttung stammenden Verunreinigungen, aus Nickel besteht, dessen Gehalt mindestens 53 Masseprozent beträgt.

2. Verbindungsverfahren nach Anspruch 1 für den Fall, daß das erste (10) und das zweite Bauteil (11) rohrförmig sind, wobei das erste Bauteil (10) eine Innenverkleidung (12) aus oxidationsfreiem Stahl aufweist und die Achse der ringförmigen Schweißfase (13) eine dem ersten und dem zweiten Bauteil (10 bzw. 11), die endseitig und koaxial zueinander angeordnet sind, gemeinsame Achse ist, dadurch gekennzeichnet, daß man in einen ersten, Wurzel genannten Bereich der Schweißfase, der zur Innenseite der rohrförmigen Bauteile (10, 11) hin angeordnet ist und Wände (13'a, 13'b) aufweist, die einen Winkel von etwa 4° mit einer Ebene senkrecht zur den beiden rohrförmigen Bauteilen (10, 11) gemeinsamen Achse bilden, eine erste Nickellegierung oder einen oxidationsfreien Stahl, und in einen zweiten Bereich der Schweißfase (13), der sich in der Verlängerung der Wurzel zur Außenseite der Bauteile hin befindet, eine zweite Nickellegierung einbringt.

3. Verfahren nach Anspruch 2, dadurch gekennzeichnet, daß die erste Nickellegierung in der Masse weniger als 0,04 % Kohlenstoff, weniger als 0,015 % Schwefel und weniger als 0,015 % Phosphor, 28 bis 31,5 % Chrom, ggf. 7 bis 12 % Eisen, weniger als 0,50 % Molybdän, weniger als 1,10 % Aluminium, weniger als 0,30 % Kupfer, weniger als 1 % Titan enthält, wobei der Rest der Legierung, mit Ausnahme der von der Verhüttung stammenden Verunreinigungen, aus Nickel besteht.

4. Verfahren nach Anspruch 2, dadurch gekennzeichnet, daß der in den ersten Bereich der Fase (13) eingebrachte, oxidationsfreie Stahl ein Stahl mit geringem Kohlenstoffgehalt ist, der in etwa 17 % Chrom und 12 % Nickel enthält.

5. Verfahren nach einem beliebigen der Ansprüche 2 bis 4, dadurch gekennzeichnet, daß die zweite Nickellegierung in Masseprozent ausgedrückt weniger als 0,10 % Kohlenstoff, 18 bis 22 % Chrom, weniger als 3 % Eisen, weniger als 0,50 % Kupfer, ggf. 2 bis 3 % Niobium, weniger als 0,75 % Titan sowie 2,50 bis 3,50 % Mangan, weniger als 0,030 % Phosphor, weniger als 0,015 % Schwefel und weniger als 0,50 % Silicium enthält, wobei der Rest der Legierung, mit Ausnahme der von der Vernuttung stammenden Verunreinigungen, aus Nickel besteht, dessen Gewichtsanteil mehr als 67 % beträgt.

6. Verfahren nach Anspruch 1, dadurch gekennzeichnet, daß das Zusatzmetall aus einer einzigen Nickellegierung besteht, die in Masseprozent ausgedrückt weniger als 0,04 % Kohlenstoff, 28 bis 31,5 % Chrom, ggf. 7 bis 12 % Eigen, weniger als 0,50 % Molybdän, weniger als 1,10 % Aluminium, weniger als 0,30 % Kupfer und weniger als 1 % Titan enthält, wobei der Rest der Legierung, mit Ausnahme der von der Verhüttung stammenden Verunreinigungen, aus Nickel besteht.

7. Verwendung eines Verfahrens nach einem beliebigen der Ansprüche 1 bis 6 zur Verbindung eines Anschlußstutzens (2) eines Druckwasser-Kernreaktors mit einer Leitung (3) des Primärkreislaufs aus oxidationsfreiem Stahl.

8. Verwendung eines Verfahrens nach einem beliebigen der Ansprüche 1 bis 6 zur Herstellung der Verbindung eines Anschlußstutzens (6) des Wasserkastens eines Dampferzeugers (5) eines Druckwasser-Kernreaktors mit einer Leitung des Primärkreislaufs des Reaktors aus oxidationsfreiem Austenitstahl.

9. Verwendung eines Verfahrens nach einem beliebigen der Ansprüche 1 bis 6 zur Herstellung der Verbindung eines Anschlußstutzens (8) eines Druckhalters (7) eines Druckwasser-Kernreaktors mit einer Expansionsleitung aus oxidationsfreiem Stahl, die mit dem Primärkreislauf des Reaktors verbunden ist.
